# DEMANDE DE BREVET EUROPEEN

(11) **EP 1 662 789 A1**
(43) Date de publication de la demande: **31.05.2006**
(21) Numéro de dépôt: 04106163.1
(22) Date de dépôt: 29.11.2004
(51) Int. Cl.: H04N 7/167

(54) **Procédé de contrôle d'accès à des données à accès conditionnel**

(71) Demandeur: Nagracard S.A., 1033 Cheseaux-sur-Lausanne (CH)
(72) Inventeur: Courtin, Nicolas, 1304, Cossonay-Ville (CH); Brique, Olivier, 1052, Le Mont-sur-Lausanne (CH); Cochard, Jimmy, 1616, Attalens (CH); Gogniat, Christophe, 1022, Chavannes-près-Renens (CH)
(74) Mandataire: Wenger, Joel-Théophile

(57) **Abrégé**

La présente invention concerne un procédé de contrôle d'accès à des données à accès conditionnel dans une unité multimédia comportant au moins un module de sécurité. Ce procédé est caractérisé par les étapes suivantes :
- réception par l'unité multimédia, d'un message de contrôle ECM contenant au moins un mot de contrôle cw;
- transmission de ce message ECM audit module de sécurité, ce message de contrôle étant associé à un droit de déchiffrement des messages;
- détermination d'une date de validité des droits de déchiffrement des messages de contrôle ECM associés audit module de sécurité;
- détermination de la date actuelle;
- comparaison de la date actuelle avec la date d'expiration des droits de déchiffrement et détermination si la date actuelle est antérieure à la date d'expiration
   - dans l'affirmative, déchiffrement du message de contrôle ECM et envoi du mot de contrôle cw à ladite unité multimédia;
   - dans la négative, lecture d'une valeur contenue dans un compteur du module de sécurité et comparaison de cette valeur pour déterminer si cette valeur est comprise dans une plage autorisant le déchiffrement;
      - dans l'affirmative, déchiffrement du message de contrôle ECM, envoi du mot de contrôle cw à ladite unité multimédia et modification de la valeur du compteur selon une règle préétablie;
      - dans la négative, blocage de l'accès auxdites données à accès conditionnel.

## Description

### DOMAINE TECHNIQUE

La présente invention concerne un procédé de contrôle d'accès à des données à accès conditionnel dans une unité multimédia comportant au moins un module de sécurité.

Elle concerne également un module de sécurité destiné à l'accès à des données à accès conditionnel, ce module de sécurité étant en particulier un module de sécurité amovible du type carte à puce contenant un crédit initial et destiné à être utilisé dans le domaine de la télévision à péage.

### TECHNIQUE ANTERIEURE

Il existe actuellement des modules de sécurité amovibles tels que des cartes à puce contenant un crédit initial. Ces modules de sécurité, dénommés cartes prépayées, sont notamment utilisés en association avec des décodeurs, dans le domaine de la télévision à péage ou à accès conditionnel. Dans ce contexte, ils permettent le déchiffrement de contenus chiffrés.

De façon bien connue, dans de tels systèmes utilisant un module de sécurité, le contenu est chiffré au moyen de mots de contrôle, puis envoyé à des unités multimédia liées à un fournisseur de données ou de contenu. Les mots de contrôles sont envoyés aux unités multimédia, sous forme chiffrée dans des messages de contrôle ECM. Ces messages de contrôle ECM sont transmis par le décodeur de l'unité multimédia au module de sécurité de cette unité. Si les droits de déchiffrement sont présents, les messages de contrôle sont déchiffrés de façon à en extraire les mots de contrôle. Ceux-ci sont retournés au décodeur qui les utilise pour déchiffrer le contenu.

En pratique, les modules de sécurité ne contiennent initialement aucun droit. Ceux-ci sont transmis lors d'une phase d'initialisation qui est réalisée généralement par un technicien lors de l'installation de l'unité multimédia. Cela signifie qu'à l'achat d'un module de sécurité prépayé, ce module ne fonctionne pas. Ceci représente un inconvénient pour l'utilisateur qui, malgré son achat, ne peut pas avoir un accès immédiat au service pour lequel il a payé.

Afin de pallier cet inconvénient, il est envisageable d'envoyer des messages d'autorisation EMM pour l'activation des modules de sécurité, selon des intervalles temporels très court, l'utilisateur devant attendre jusqu'à ce que son module ait reçu un tel message. Ceci présente toutefois l'inconvénient d'utiliser une importante bande passante, qui n'est pas toujours disponible et qui est coûteuse pour le fournisseur de données.

Il est bien entendu possible d'introduire des droits de déchiffrement lors de la personnalisation du module de sécurité, c'est-à-dire en fin de processus de fabrication, avant que ce module ne soit mis en vente. Ceci aurait pour effet de rendre la carte immédiatement fonctionnelle lors de son introduction dans le décodeur. Cette procédure n'est toutefois pratiquement jamais mise en oeuvre dans la réalité. En effet, en cas de vol des modules de sécurité par exemple, il serait nécessaire d'envoyer des messages d'autorisation EMM contenant d'une part un identifiant des modules volés et d'autre part, une commande de désactivation, dans le but de rendre ces modules volés inopérants. Le traitement de tels messages d'autorisation EMM peut être bloqué relativement facilement. Il serait donc difficile, voire impossible de désactiver les modules volés.

Il y a donc une incompatibilité entre le fonctionnement immédiat du module de sécurité dès son introduction dans un décodeur et la capacité de désactiver un module de sécurité volé ou à désactiver pour d'autres raisons.

La présente invention se propose de réaliser un module de sécurité qui soit immédiatement opérationnel lors de son introduction dans n'importe quel décodeur approprié, sans inscription préalable auprès d'un centre de gestion. Elle se propose également de laisser à un opérateur la possibilité de désactiver un ou plusieurs modules de sécurité, en particulier en cas de vols de modules ou au cas où certains modules sont utilisés de façon non autorisée.

### EXPOSE DE L'INVENTION

Les buts de l'invention sont atteints par un procédé tel que défini en préambule et caractérisé en ce qu'il comporte les étapes suivantes :
- réception par l'unité multimédia, d'un message de contrôle ECM contenant au moins un mot de contrôle cw;
- transmission de ce message ECM audit module de sécurité, ce message de contrôle étant associé à un droit de déchiffrement des messages;
- détermination d'une date de validité des droits de déchiffrement des messages de contrôle ECM associés audit module de sécurité;
- détermination de la date actuelle;
- comparaison de la date actuelle avec la date d'expiration des droits de déchiffrement et détermination si la date actuelle est antérieure à la date d'expiration;
   - dans l'affirmative, déchiffrement du message de contrôle ECM et envoi du mot de contrôle cw à ladite unité multimédia;
   - dans la négative, lecture d'une valeur contenue dans un compteur du module de sécurité et comparaison de cette valeur pour déterminer si cette valeur est comprise dans une plage autorisant le déchiffrement;
      - dans l'affirmative, déchiffrement du message de contrôle ECM, envoi du mot de contrôle cw à ladite unité multimédia et modification de la valeur du compteur selon une règle pré-établie;
      - dans la négative, blocage de l'accès auxdites données à accès conditionnel.

Ces buts sont également atteints par un procédé caractérisé en ce qu'il comporte les étapes suivantes :
- réception par l'unité multimédia, d'un message de contrôle ECM contenant au moins un mot de contrôle cw;
- transmission de ce message ECM audit module de sécurité, ce message de contrôle étant associé à un droit de déchiffrement des messages;
- lecture d'une valeur contenue dans un compteur du module de sécurité
- comparaison de cette valeur du compteur pour déterminer si cette valeur est comprise dans une plage autorisant le déchiffrement;
   - dans la négative, blocage de l'accès auxdites données à accès conditionnel.
   - dans l'affirmative, déchiffrement du message de contrôle ECM et envoi du mot de contrôle cw à ladite unité multimédia
   - détermination d'une date de validité des droits de déchiffrement des messages de contrôle ECM associés audit module de sécurité;
   - détermination de la date actuelle;
   - comparaison de la date actuelle avec la date d'expiration des droits de déchiffrement et détermination si la date actuelle est antérieure à la date d'expiration;
      - dans l'affirmative, autorisation d'accès aux données à accès conditionnel;
      - dans la négative, modification de la valeur du compteur selon une règle pré-établie et autorisation d'accès aux données à accès conditionnel.

Les buts de l'invention sont en outre atteints par un module de sécurité tel que défini en préambule et caractérisé en ce qu'il comporte un compteur agencé pour compter le nombre de messages de gestion ECM déchiffrés et des moyens de blocage de l'affichage des données lorsqu'un nombre prédéterminé de déchiffrement à été atteint.

Selon cette invention, lors de la personnalisation des modules de sécurité, des droits sont introduits dans ces modules. Ces droits permettent aux modules de fonctionner dès leur première introduction dans un décodeur. Ces droits sont toutefois limités de sorte qu'ils ne donnent pas accès à la totalité des capacités du module de sécurité. Plus particulièrement, les droits sont limités dans le temps.

De cette façon, si le module de sécurité n'est pas en communication avec un centre de gestion en charge de la transmission des droits, le module de sécurité pourra uniquement fonctionner de manière limitée. Pour pouvoir fonctionner en utilisant les capacités qui ont été prévues, il sera nécessaire de permettre une communication entre le centre de gestion et le module de sécurité.

Ceci permet à l'opérateur d'empêcher l'accès aux données par l'intermédiaire de modules de sécurité qui ont été volés ou qui sont utilisés de manière illégale. Ce blocage de l'accès aux données peut se faire de manière active, en envoyant un message de blocage sous la forme d'un message de gestion EMM. Le blocage peut également se faire de manière passive, en ne renouvelant pas les droits de déchiffrement. Ainsi, si les messages de gestion sont bloqués dans le but d'éliminer les instructions de blocage à destination d'un module de sécurité, ce blocage se fera malgré tout, de manière passive.

Le compteur permet donc au module de fonctionner dès son introduction dans un décodeur, de façon à satisfaire l'utilisateur. Ceci permet au module d'attendre la réception d'un message de gestion EMM renouvelant les droits. Le principal avantage de ce compteur est de pouvoir augmenter la durée du cycle entre deux de ces messages de gestions EMM et donc de sauvegarder de la bande passante, coûteuse pour l'opérateur de télévision à péage. Ceci est réalisé sans pénaliser l'utilisateur.

L'initialisation de ce compteur lors de la personnalisation du module permet le fonctionnement de ce module sans délai, lors de la première utilisation, jusqu'à réception du premier message de gestion EMM.

La mise à jour du compteur en même temps que la mise à jour de la date de validité intermédiaire permet le fonctionnement du module sans délai lors d'utilisations ultérieures du module jusqu'à réception d'un prochain message de gestion EMM. Ceci permet de ne pas pénaliser les utilisateurs insérant un module après une longue période hors de l'unité multimédia.

Le fait d'envoyer la valeur du compteur dans les messages de gestion EMM permet de modifier cette valeur en fonction des contraintes opérationnelles. On peut par exemple augmenter cette valeur si la bande passante disponible pour les messages de gestion EMM diminue.

### DESCRIPTION SOMMAIRE DES DESSINS

La présente invention et ses avantages seront mieux compris en référence aux figures annexées et à la description détaillée de modes de réalisation particuliers, dans lesquelles :
- la figure 1 illustre le mode de réalisation préféré du procédé selon la présente invention; et
- la figure 2 illustre une variante du procédé de l'invention.

### MANIERE DE REALISER L'INVENTION

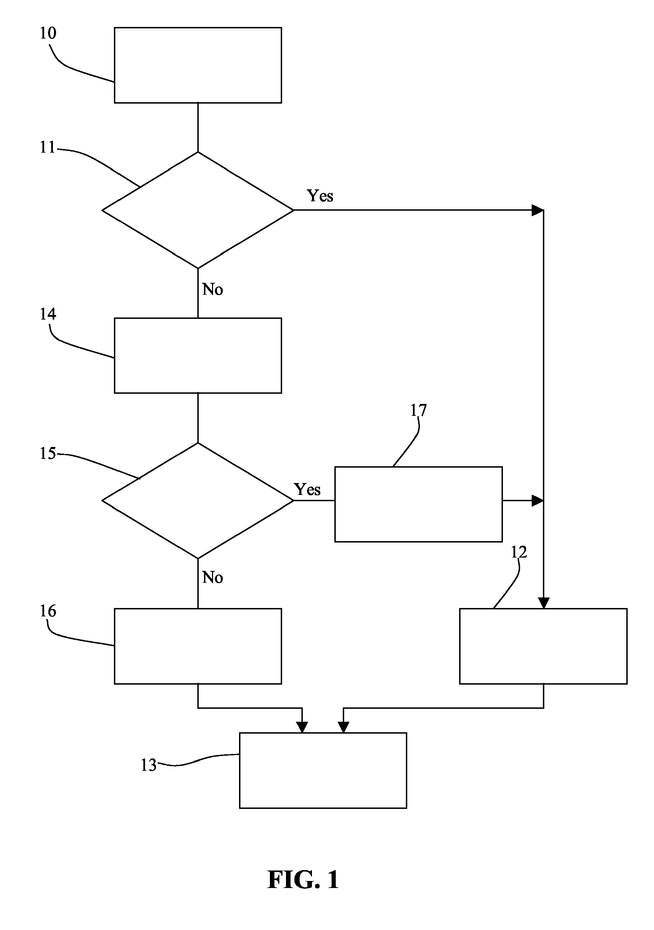

En référence à la figure 1, le procédé de l'invention est expliqué dans une application particulière concernant la télévision à accès conditionnel. Dans cette application, un centre de gestion envoie des données à accès conditionnel à une pluralité d'unités multimédia comportant chacune un décodeur et un module de sécurité. Dans l'application considérée, le module de sécurité est du type amovible et peut être en particulier réalisé sous la forme d'une carte à puce. Le module comporte notamment un compteur dont la fonction est expliquée ci-dessous.

De façon conventionnelle, les données à accès conditionnel telles qu'envoyées par le centre de gestion forment un contenu de télévision à péage. Ces données sont chiffrées au moyen de mots de contrôle cw. Les mots de contrôle cw sont eux-mêmes chiffrés et envoyés aux utilisateurs concernés sous la forme de messages de contrôle ECM. Les droits d'accès au contenu chiffré peuvent être envoyés aux unités multimédia des utilisateurs sous la forme de messages d'autorisation EMM.

Lorsqu'un utilisateur souhaite avoir accès à un contenu chiffré, les messages de contrôle reçus par le décodeur de cet utilisateur sont transmis au module de sécurité de l'unité multimédia concernée. Le module de sécurité vérifie tout d'abord s'il dispose des droits requis pour accéder au contenu. Si tel est le cas, le module de sécurité déchiffre les messages de contrôle ECM pour en extraire les mots de contrôle cw. Ceux-ci sont alors retournés au décodeur qui les utilise pour déchiffrer le contenu.

Comme indiqué précédemment, le module de sécurité selon la présente invention contient un compteur. Une valeur prédéterminée est introduite dans ce compteur lors de la personnalisation. Cette valeur peut être une valeur numérique ou une durée notamment. Ce module de sécurité contient également une date d'expiration finale qui ne peut pas être modifiée et qui est la date au-delà de laquelle ce module ne pourra plus fonctionner. Il contient également un registre prévu pour recevoir une date de validité intermédiaire. Lors de la personnalisation, ce registre peut être laissé vide. Il est toutefois également possible d'introduire une date à la personnalisation, cette date étant par exemple la date de la personnalisation ou une date relativement proche.

Le module de sécurité peut en outre contenir un crédit qui représente une somme d'argent chargée dans ce module. Ce crédit est également chargé lors de la personnalisation ou ultérieurement, par exemple lors de l'achat du module par un utilisateur.

Lorsqu'un utilisateur a acquis un module de sécurité en vue d'avoir accès à un contenu de télévision à péage, il peut introduire ce module dans n'importe quel décodeur adéquat. Lorsque l'utilisateur requiert l'accès à un contenu chiffré, le procédé de l'invention comporte tout d'abord une étape de vérification de la date de validité intermédiaire. Si le registre contenant cette date est vide ou qu'il contient une date située avant la date actuelle, le procédé se poursuit par une étape de lecture de la valeur du compteur du module de sécurité.

Si la valeur du compteur est comprise dans une plage autorisant le déchiffrement, le module de sécurité déchiffre le message de contrôle ECM de façon à en extraire le mot de contrôle cw. Il retourne ensuite ce mot de contrôle cw à ladite unité multimédia. En pratique, il est courant d'utiliser une valeur numérique non nulle, par exemple 180, comme valeur initiale du compteur et de décrémenter de 1 unité, la valeur du compteur lors de chaque déchiffrement. Dans le cas où la cryptopériode, c'est-à-dire l'intervalle entre deux changements successifs de mots de contrôle est de 10 secondes, la valeur de 180 correspond au déchiffrement de 1800 secondes, soit 30 minutes de contenu. Comme indiqué précédemment, la valeur de compteur peut également être une durée, par exemple 30 minutes. Dans ce cas, le temps de déchiffrement autorisé est indépendant de la cryptopériode. Par contre, il est nécessaire d'utiliser des moyens de mesure du temps autres que le comptage du nombre de messages de contrôle ECM déchiffrés. Ces moyens peuvent notamment utiliser une horloge contenue dans le décodeur ou le temps absolu envoyé par le centre de gestion. Dans ce cas, l'heure du début du déchiffrement d'un message de contrôle est mémorisée. Lors de chaque déchiffrement, la durée entre cette heure de début de déchiffrement et l'heure actuelle est calculée. Cette durée est ensuite comparée à la durée contenue dans le compteur. L'accès aux données est autorisé uniquement si la durée calculée est inférieure à la durée mémorisée dans le compteur.

Le centre de gestion envoie à intervalles réguliers, un message d'autorisation EMM contenant une date de validité intermédiaire. Selon une forme de réalisation préférée, les messages d'autorisation EMM contiennent une ou plusieurs plages de numéros d'identification des modules de sécurité auxquels une date de validité intermédiaire et une valeur de compteur doivent être envoyées. Les modules de sécurité dont le numéro d'identification ne figure dans aucunes des plages des messages d'autorisation ne reçoivent donc pas de nouvelle date de validité intermédiaire et le compteur n'est pas réinitialisé. De cette manière, les modules de sécurité dont le numéro unique d'identification n'est pas contenu dans un message d'autorisation EMM sont désactivés de façon passive.

Il est à noter que, en fonction de la taille des messages d'autorisation EMM et de la place nécessaire pour envoyer toutes les plages concernées, il est possible de générer un seul ou au contraire plusieurs messages d'autorisation EMM. Ces messages peuvent être envoyés à des groupes de modules de sécurité ou à tous les modules. Selon une variante, les messages d'autorisation EMM peuvent être envoyés individuellement, en utilisant des numéros d'identification uniques des modules de sécurité.

Lorsqu'un tel message d'autorisation EMM est reçu par une unité multimédia d'un utilisateur, il est déchiffré pour en extraire d'une part la date de validité intermédiaire et d'autre part la nouvelle valeur de compteur. Ces deux données sont mémorisées aux emplacements adéquats du module de sécurité.

Lors d'utilisations ultérieures à la première utilisation, la date de validité intermédiaire du module est lue. Ceci est représenté par l'étape 10 de la figure 1. Cette date de validité est comparée à la date actuelle. Il est ensuite vérifié, dans une étape 11, si la date actuelle est postérieure ou antérieure à la date de validité intermédiaire mémorisée. Si la date actuelle est antérieure à la date de validité intermédiaire, le déchiffrement se déroule de façon conventionnelle, ce qui est représenté par une étape 12 sur la figure 1. La valeur du compteur est inchangée et le procédé est terminé, ce qui est symbolisé par une étape 13.

Si, lors de l'étape de comparaison, il apparaît que la date actuelle est postérieure à la date de validité intermédiaire, la valeur du compteur est lue lors d'une étape 14. Cette valeur est comparée, dans une étape 15, à la plage de valeurs pour lesquelles le déchiffrement est autorisé. Dans un mode de réalisation faisant l'objet de l'exemple décrit, la plage de valeurs pour lesquelles le déchiffrement est autorisé s'étend de 1 à 180, bornes comprises. Si cette valeur de compteur est en dehors de la plage de déchiffrement autorisée, dans notre exemple, si cette valeur est nulle, l'affichage des données ou l'accès à ces données est bloqué. Ce blocage peut se faire par le blocage du déchiffrement dans le module de sécurité ou à un autre niveau dans le décodeur. Ce blocage est symbolisé par l'étape 16 de la figure 1. Le procédé est arrêté, ce qui correspond l'étape 13. Il est à noter que la vérification de la valeur du compteur et de la date de validité permet de bloquer tout ou partie des fonctionnalités du module de sécurité, comme par exemple l'utilisation d'un crédit existant ou le chargement d'un crédit supplémentaire.

Si, lors de l'étape 15, il est déterminé que la valeur du compteur est comprise dans la plage de déchiffrement autorisé, c'est-à-dire que cette valeur est supérieure à zéro ou comprise entre 1 et 180 dans notre exemple, un message de contrôle ECM est déchiffré et la valeur du compteur est modifiée selon une règle pré-établie. Selon un mode de réalisation particulier, la valeur est décrémentée de 1. Cette décrémentation peut se faire avant ou après le déchiffrement du message de contrôle ECM, ce qui correspond à l'étape 17 de la figure 1.

Selon une variante de réalisation, la valeur du compteur pourrait être nulle au départ et incrémentée lors des déchiffrements. Le blocage serait alors effectué lorsque le compteur atteint une limite prédéfinie. Il est également possible de décrémenter le compteur de valeurs différentes en fonction des contenus diffusés. Le compteur pourrait être décrémenté d'une unité lors de la diffusion d'un film et de deux unités lors de la diffusion d'un match de sport.

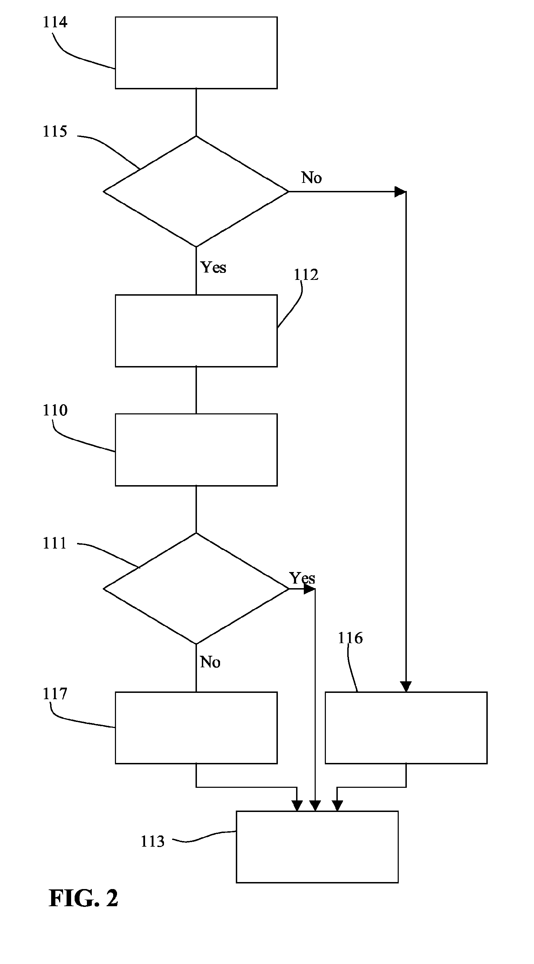

Le procédé de l'invention a été décrit en référence à la figure 1, selon un mode de réalisation dans lequel l'étape de comparaison entre la date de validité et la date actuelle est effectuée avant l'étape de contrôle de la valeur du compteur. La figure 2 illustre une variante dans laquelle les étapes similaires à celles de la figure 1 portent des numéros de référence augmentés de 100. Selon cette variante illustrée par la figure 2, il est également possible de commencer le procédé par une étape 114 de lecture de la valeur contenue dans le compteur. Cette étape est suivie d'une étape 115 ayant pour objectif de déterminer si la valeur du compteur est comprise dans la plage de déchiffrement autorisé, c'est-à-dire que cette valeur est supérieure à 0. Si cette valeur est en dehors de la plage de déchiffrement autorisé, ou dans notre exemple, si elle est nulle, l'accès aux données est interdit, ce qui est illustré par une étape 116. Si cette valeur n'est pas nulle, le mot de contrôle est déchiffré dans une étape 112. La date de validité intermédiaire est ensuite lue lors d'une étape 110 et comparée à la date actuelle dans l'étape 111. Si la date actuelle est postérieure à la date de validité intermédiaire, le compteur est décrémenté selon la règle préétablie, correspondant à l'étape 117. Sinon, cette valeur du compteur n'est pas modifiée et l'accès aux données est autorisé.

Comme indiqué précédemment, le module de sécurité peut également comporter un crédit. Le procédé de l'invention peut également comporter, avant toute autre démarche, une étape de vérification du crédit restant dans le module. Cette vérification s'effectue de la manière suivante. Lorsqu'un utilisateur indique qu'il souhaite avoir accès un contenu déterminé auquel est associé un montant prédéfini, le module vérifie s'il contient un crédit supérieur ou égal au montant associé au contenu demandé. Si tel est le cas, le procédé tel qu'expliqué précédemment est entrepris. Si ce procédé aboutit au déchiffrement des données, le crédit est décrémenté du montant associé à l'événement et le nouveau crédit est mémorisé.

Si le procédé correspondant aux étapes référencées de 10 à 16 n'aboutit pas au déchiffrement des données, le crédit n'est pas modifié.

Si le crédit initial est inférieur au montant associé au contenu requis, le droit d'accès à l'événement n'est pas donné et le contenu ne peut pas être visualisé. Selon le mode de réalisation choisi, il est possible de permettre le chargement d'un crédit supplémentaire dans le module de sécurité ou au contraire, d'empêcher ce chargement.

## Revendications

1. Procédé de contrôle d'accès à des données à accès conditionnel dans une unité multimédia comportant au moins un module de sécurité, **caractérisé en ce qu'**il comporte les étapes suivantes :
• réception par l'unité multimédia, d'un message de contrôle ECM contenant au moins un mot de contrôle cw;
• transmission de ce message ECM audit module de sécurité, ce message de contrôle étant associé à un droit de déchiffrement des messages;
• détermination d'une date de validité des droits de déchiffrement des messages de contrôle ECM associés audit module de sécurité;
• détermination de la date actuelle;
• comparaison de la date actuelle avec la date d'expiration des droits de déchiffrement et détermination si la date actuelle est antérieure à la date d'expiration
- dans l'affirmative, déchiffrement du message de contrôle ECM et envoi du mot de contrôle cw à ladite unité multimédia;
- dans la négative, lecture d'une valeur contenue dans un compteur du module de sécurité et comparaison de cette valeur pour déterminer si cette valeur est comprise dans une plage autorisant le déchiffrement;
• dans l'affirmative, modification de la valeur du compteur selon une règle pré-établie, déchiffrement du message de contrôle ECM et envoi du mot de contrôle cw à ladite unité multimédia;
• dans la négative, blocage de l'accès auxdites données à accès conditionnel.

2. Procédé de contrôle d'accès à des données à accès conditionnel dans une unité multimédia comportant au moins un module de sécurité, **caractérisé en ce qu'**il comporte les étapes suivantes :
• réception par l'unité multimédia, d'un message de contrôle ECM contenant au moins un mot de contrôle cw;
• transmission de ce message ECM audit module de sécurité, ce message de contrôle étant associé à un droit de déchiffrement des messages;
• lecture d'une valeur contenue dans un compteur du module de sécurité
• comparaison de cette valeur du compteur pour déterminer si cette valeur est comprise dans une plage autorisant le déchiffrement;
- dans la négative, blocage de l'accès auxdites données à accès conditionnel.
- dans l'affirmative, déchiffrement du message de contrôle ECM et envoi du mot de contrôle cw à ladite unité multimédia
- détermination d'une date de validité des droits de déchiffrement des messages de contrôle ECM associés audit module de sécurité;
- détermination de la date actuelle;
- comparaison de la date actuelle avec la date d'expiration des droits de déchiffrement et détermination si la date actuelle est antérieure à la date d'expiration;
• dans l'affirmative, autorisation d'accès aux données à accès conditionnel;
• dans la négative, modification de la valeur du compteur selon une règle pré-établie et autorisation d'accès aux données à accès conditionnel.

3. Procédé selon la revendication 1 ou 2, **caractérisé en ce que** l'unité multimédia reçoit, selon des intervalles de temps prédéfinis, un message d'autorisation EMM contenant une date de validité postérieure à la date de validité actuelle, cette date de validité étant destinée au module de sécurité.

4. Procédé selon la revendication 3, **caractérisé en ce que** le message d'autorisation EMM comprend en outre une valeur à introduire dans le compteur du module de sécurité.

5. Procédé selon la revendication 4, **caractérisé en ce que** la valeur à introduire dans le compteur est une valeur numérique, cette valeur numérique étant liée au nombre de messages de contrôle ECM que le module de sécurité est autorisé à déchiffrer.

6. Procédé selon la revendication 4, **caractérisé en ce que** la valeur à introduire dans le compteur est une durée, cette durée étant liée à la durée du contenu que le module de sécurité est autorisé à déchiffrer.

7. Procédé selon la revendication 1 ou 2, **caractérisé en ce que** la plage de valeurs autorisant le déchiffrement est comprise entre 1 et une valeur de seuil supérieure à 1, les bornes de cette plage étant comprises dans la plage, et **en ce que** la règle pré-établie pour la modification de la valeur du compteur consiste à décrémenter cette valeur.

8. Procédé selon la revendication 7, **caractérisé en ce que** la valeur du compteur est décrémentée d'au moins une unité chaque fois qu'un message de contrôle ECM est déchiffré.

9. Procédé selon la revendication 8, **caractérisé en ce que** la valeur du compteur est décrémentée d'un nombre d'unités dépendant du contenu associé aux messages de contrôle ECM déchiffrés.

10. Module de sécurité destiné à l'accès à des données à accès conditionnel, **caractérisé en ce qu'**il comporte un compteur agencé pour compter le nombre de messages de gestion ECM déchiffrés et des moyens de blocage de l'affichage des données lorsqu'un nombre prédéterminé de déchiffrement à été atteint.
